# EUROPEAN PATENT APPLICATION

(11) **EP 1 583 293 A2**
(43) Date of publication of application: **05.10.2005**
(21) Application number: 04025923.6
(22) Date of filing: 02.11.2004
(51) Int. Cl.: H04L 12/56

(54) **Inter-terminal information transfer system**

(30) Priority: 31.03.2004 JP 2004107483
(71) Applicant: FUJITSU LIMITED, Kanagawa 211-8588 (JP)
(72) Inventor: Takusagawa, Hideaki, Kawasaki-shi Kanagawa 211-8588 (JP); Matsumoto, Yuji, Kohoku-ku Yokohama-shi Kanagawa 222-0033 (JP)
(74) Representative: HOFFMANN EITLE

(57) **Abstract**

Provided is an inter-terminal information transfer system which is provided with a transfer assistance apparatus and terminals (10,20), including: a storage unit (33) that stores transfer assistance information; and an antenna unit (32), wherein: each of the terminals includes a reader unit (13) that reads the transfer assistance information from the storage unit (33) included in the transfer assistance apparatus (30) via the antenna unit thereof, and a communication unit that performs network communication; the reader unit (13) reads the transfer assistance information from the storage unit included in the transfer assistance apparatus (30) via the antenna unit thereof; and the communication unit performs information transfer with another terminal based on the read transfer assistance information.

## Description

### BACKGROUND OF THE INVENTION

The invention relates to a technology for performing information transfer between terminals.

In recent years, information transfer has been frequently performed between information communication terminals such as cellular phones, PDAs, and notebook PCs (particularly, between adjacent terminals). As the information transfer between the adjacent terminals, for example, there are file sharing between notebook PCs in a conference, file transfer from a desktop PC to a PDA, telephone directory exchange between cellular phones, and the like.

As methods of transferring information between the adjacent terminals, there are methods utilizing (1) a recording medium (a memory card or the like) and (2) a network (including a USB cable, Bluetooth, or a wireless LAN). With regard to (1), there is a problem in that it becomes necessary to insert/eject the recording medium, which is troublesome. With regard to (2), although there is not work for inserting/ejecting the recording medium, there is a problem in that an operation for the information transfer is complicated and is not intuitive at present.

The reason that this problem of (2) occurs will be described by taking as an example the file sharing on a PC network.

As current file sharing systems on the PC network, there are systems such as NFS (Network File System) in UNIX (registered trademark), SMB (Server Message Block) in Windows (registered trademark), and AppleShare in MAC OS. Moreover, OS independent FTP (File Transfer Protocol) standardized by IETF is also one of the file sharing systems.

A common point of these file sharing systems (software) is that files or folders shared by another terminal are "virtually" displayed on a screen of a terminal of a user himself/herself, and a file desired to be transferred is selected and acquired from the files or the folders. Although the operation may be normal for practicians of the personal computers, this approach is not always intuitive for users unaccustomed to the personal computers.

Particularly, a point that the shared files or folders must be "virtually" operated even though the terminals are "physically" adjacent to each other is not intuitive, and there is room for improvement. Furthermore, in the current file sharing, setting of the shared folder (for access rights and the like), a search and connection of the adjacent computer, and the like are necessary, and a series of operations for displaying the folder shared by the other terminal are also complicated. Hence, as the information communication terminal becomes more universal and more users at various technical levels will use the information communication terminal in the future, an intuitive information transfer method between the adjacent terminals, which saves time and trouble, is desired.

Moreover, for terminals that can be controlled using an electronic pen, there exists a method for transferring data between the terminals through a memory embedded in the pen (for example, refer to Patent document 1). This conventional technology has proposed an information transfer method that firstly transmits and temporarily stores information in the memory in the electronic pen by tapping the corresponding information displayed on the screen of the terminal apparatus by means of the electronic pen, and then, when another terminal screen is tapped by the same electronic pen, the information stored in the electronic pen is transmitted to the other terminal.

In this information transfer, the file desired to be transferred is selected by means of the electronic pen, and the electronic pen is "physically" moved to the transfer destination terminal, and accordingly, the operation might be intuitive.

However, there are mainly two problematic points in this conventional technology. The first point is that transferable information is limited to a capacity of the memory in the electronic pen because this technology adopts a system of temporarily capturing the data itself to be transferred into the memory of the electronic pen. For example, when the electronic pen incorporates a memory of 64 MB therein, the electronic pen cannot transfer a folder or movie file of several hundred MB. In this case, a volume of data transferable at once is limited to 64 MB. The second point is that the memory, a CPU, and a power source for driving these devices are necessary for the electronic pen. A diameter of a stylus pen for use in the current PDA or the like is about 5 mm, and it is physically difficult to embed the devices therein. In addition, the stylus pen is expensive also in terms of cost.

### [Patent document 1] JP 09-34638 A

An object to be achieved by the invention is to provide a technology for performing information transfer between terminals without being limited to the capacity of a memory included in a transfer assistance apparatus (also referred to as a relay apparatus) such as an electronic pen when the information transfer is performed between the terminals by use of the transfer assistance apparatus, and further to provide a technology in which the transfer assistance apparatus such as the electronic pen does not require a power source for driving the devices thereof.

### SUMMARY OF THE INVENTION

The invention is one created in order to solve the problems. The invention is an inter-terminal information transfer system which includes a transfer assistance apparatus and terminals, configured such that: the transfer assistance apparatus includes: a storage unit that stores transfer assistance information; and an antenna unit that transmits the information in the storage unit by use of a received radio wave; each of the terminals includes a reader unit that reads the transfer assistance information from the storage unit included in the transfer assistance apparatus via the antenna unit thereof, and a communication unit that performs network communication; the reader unit reads the transfer assistance information from the storage unit included in the transfer assistance apparatus via the antenna unit thereof; and the communication unit performs information transfer with another terminal based on the read transfer assistance information.

According to the invention, the terminal reads information necessary for data transfer (the transfer assistance information) from the storage unit included in the transfer assistance apparatus, thus making it possible to perform the actual data transfer between the terminals via a network.

Specifically, data itself is not transferred through the transfer assistance apparatus (an electronic pen) like the conventional case. Only the transfer assistance information relatively small in capacity is stored in the transfer assistance apparatus.

Hence, according to the invention, it becomes possible to perform the information transfer between the terminals without being limited to a capacity of a memory included in the transfer assistance apparatus such as the electronic pen.

Specifically, information read by the terminal from the transfer assistance apparatus (for example, a RFID tag) is not a file to be transferred itself, but is information assisting the transfer (for example, an IP address of the terminal, path information to the file, and the like), and the actual information transfer is performed between the terminals through the network including a wireless LAN and Bluetooth. Accordingly, there are no limitations on an amount of information to be transferred.

Moreover, when the storage unit and the antenna unit are composed of a non-contact IC chip such as the RFID tag(Radio frequency ID), a power source by which the transfer assistance apparatus such as the electronic pen drives the devices thereof becomes unnecessary. Specifically, read and write of the storage unit are performed by use of a voltage generated from a radio wave received by the antenna unit (for example, of the RFID tag), and accordingly, a memory chip, a CPU, and the power source become unnecessary. Furthermore, thanks to downsizing of the RFID tag, a chip of which size is equal to or less than 0.5 mm square has also been realized already, and it is physically possible to incorporate the chip in the electronic pen or the like. In addition, this chip becomes advantageous as compared with the CPU and the memory also in terms of cost.

In the inter-terminal information transfer system, for example: the transfer assistance information is an identifier of a transfer destination terminal; and when arbitrary information to be transferred among information held by a transfer source terminal is indicated through a display screen included in the transfer source terminal, the transfer source terminal transfers the indicated arbitrary information to the transfer destination terminal indicated by the transfer assistance information read from the storage unit included in the transfer assistance apparatus.

This is one showing an example of the transfer assistance information.

Moreover, in the inter-terminal information transfer system, for example: the transfer assistance information is a pointer to the information held by the transfer source terminal; each of the terminals further includes a writer unit that writes the information to the storage unit included in the transfer assistance apparatus via the antenna unit thereof; when arbitrary information to be transferred among information held by the transfer source terminal is indicated through a display screen included in the transfer source terminal, the transfer source terminal writes the pointer to the indicated information into the storage unit by the writer unit; and further, when a display screen included in the transfer destination terminal is indicated, the transfer destination terminal reads the transfer assistance information from the storage unit, and acquires the information from the transfer source terminal by use of the pointer indicated by the transfer assistance information.

This is also one showing an example of the transfer assistance information.

Moreover, in the inter-terminal information transfer system, for example, the information to be transferred between the terminals is at least one of a file and a folder that are held by the transfer source terminal.

This is an illustration of the information to be transferred between the terminals. Hence, the information to be transferred between the terminals in the invention is not limited to the file or the folder. For example, the information to be transferred between the terminals is application information on an application being executed by the transfer source terminal. The transfer destination terminal may also be configured to provide an environment of the same application as that being executed by the transfer source terminal upon receiving the application information taken.

Moreover, in the inter-terminal information transfer system, for example, the transfer assistance apparatus is an input apparatus of the terminal.

This is an illustration of the transfer assistance apparatus. Hence, the transfer assistance apparatus is not limited to the input apparatus of the terminal. For example, the transfer assistance apparatus may be a cellular phone carried by a user or another apparatus.

Moreover, in the inter-terminal information transfer system, for example, the input apparatus which is the transfer assistance apparatus is an electronic pen of the terminal.

This is an illustration of the input apparatus. Hence, the input apparatus is not limited to the electronic pen. For example, the input apparatus may be a mouse or another input apparatus.

Moreover, in the inter-terminal information transfer system, for example, the storage unit that stores the transfer assistance information and the antenna unit that transmits the information of the storage unit by use of the received radio wave may be composed of a non-contact IC chip (for example, a RFID tag).

With this configuration, read and write of the storage unit are performed by use of a voltage generated from the radio wave received by the antenna unit, and accordingly, the memory chip, the CPU, and the power source become unnecessary. Furthermore, thanks to downsizing of the RFID tag, a chip of which size is equal to or less than 0.5 mm square has also been realized already, and it is physically possible to incorporate the chip in the electronic pen or the like. In addition, this chip becomes advantageous as compared with the CPU and the memory also in terms of cost.

Moreover, the invention can also be specified as below.

A system for performing information transfer between terminals, including: a transfer source terminal; and a transfer assistance apparatus that includes a storage unit storing transfer destination specifying information for specifying a transfer destination, wherein the transfer source terminal includes: a display that displays candidates to be transferred; inputting means for allowing a user to select one to be transferred among the candidates to be transferred, which are displayed on the display; reading means for reading the transfer destination specifying information from the storage unit included in the transfer assistance apparatus; and means for transmitting, to the transfer destination specified by the transfer destination specifying information, the selected candidate to be transferred.

A system for performing information transfer between terminals, including: a transfer source terminal; a transfer destination terminal; and a transfer assistance apparatus that includes a storage unit, wherein: the transfer source terminal includes: a display displaying candidates to be transferred; inputting means for allowing a user to select one to be transferred among the candidates to be transferred, which are displayed on the display; and writing means for writing information for accessing the selected candidate to be transferred into the storage unit included in the transfer assistance apparatus; and the transfer destination terminal includes: a display displaying candidates for a storage destination; inputting means for allowing a user to select one to be set as the storage destination among the candidates for the storage destination, which are displayed on the display; reading means for reading, from the storage unit which the transfer assistance apparatus includes, the information for accessing the selected candidate to be transferred; and means for acquiring the selected candidate to be transferred from the transfer source terminal based on the information for accessing the selected candidate to be transferred, and storing the selected candidate to be transferred in the selected storage destination.

Moreover, the invention can be specified as below as inventions of methods.

A method of performing information transfer in a system including a transfer source terminal, a transfer destination terminal, and a transfer assistance apparatus terminal that includes a storage unit storing transfer destination specifying information for specifying a transfer destination, the method including the steps of: by the transfer source terminal, displaying candidates to be transferred on a display thereof; by the transfer source terminal, allowing a user to select one to be transferred among the displayed candidates to be transferred; by the transfer source terminal, reading the transfer destination specifying information from the storage unit included in the transfer assistance apparatus; and by the transfer source terminal, transmitting, to the transfer destination specified by the transfer destination specifying information, the selected candidate to be transferred.

A method of performing information transfer in a system including a transfer source terminal, a transfer destination terminal, and a transfer assistance apparatus terminal that includes a storage unit, the method including the steps of: by the transfer source terminal, displaying candidates to be transferred on a display thereof; by the transfer source terminal, allowing a user to select one to be transferred among the candidates to be transferred, which are displayed on the display; by the transfer source terminal, writing information for accessing the selected candidate to be transferred into the storage unit included in the transfer assistance apparatus; by the transfer destination terminal, displaying candidates for a storage destination on a display thereof; by the transfer destination terminal, allowing a user to select one to be set as the storage destination among the candidates for the storage destination, which are displayed on the display; by the transfer destination terminal, reading, from the storage unit which the transfer assistance apparatus includes, the information for accessing the selected candidates to be transferred; and by the transfer destination terminal, acquiring the selected candidate to be transferred from the transfer source terminal based on the information for accessing the selected candidate to be transferred, and storing the selected candidate to be transferred in the selected storage destination.

Moreover, the invention can be specified as below as inventions of terminals.

A terminal performing information transfer with another terminal, including: a display displaying candidates to be transferred; inputting means for allowing a user to select one to be transferred among the candidates to be transferred, which are displayed on the display; reading means for reading transfer destination specifying information from a storage unit included in a transfer assistance apparatus; and means for transmitting, to a transfer destination specified by the transfer destination specifying information, the selected candidate to be transferred.

A terminal performing information transfer with another terminal, including: a display displaying candidates to be transferred; inputting means for allowing a user to select one to be transferred among the candidates to be transferred, which are displayed on the display; and writing means for writing information for accessing the selected candidate to be transferred into a storage unit included in a transfer assistance apparatus.

A terminal performing information transfer with another terminal, including: a display displaying candidates for a storage destination; inputting means for allowing a user to select one to be set as the storage destination among the candidates for the storage destination, which are displayed on the display; reading means for reading, from a storage unit included in a transfer assistance apparatus, information for accessing a candidate to be transferred; and means for acquiring the candidate to be transferred from the transfer source terminal based on the information for accessing the candidate to be transferred, and storing the candidate to be transferred in the selected storage destination.

Moreover, the invention can be specified as below as inventions of programs.

A program for causing a terminal performing information transfer with another terminal to function as: inputting means for allowing a user to select one to be transferred among candidates to be transferred, which are displayed on a display included in the terminal; reading means for reading transfer destination specifying information for specifying a transfer destination from a storage unit included in a transfer assistance apparatus; and means for transmitting, to the transfer destination specified by the transfer destination specifying information, the selected candidate to be transferred.

A program for causing a terminal performing information transfer with another terminal to function as: inputting means for allowing a user to select one to be transferred among candidates to be transferred, which are displayed on a display included in the terminal; and writing means for writing, into a storage unit included in a transfer assistance apparatus, information for accessing the selected candidate to be transferred.

A program for causing a terminal performing information transfer with another terminal to function as: inputting means for allowing a user to select one to be set as a storage destination among candidates for the storage destination, which are displayed on a display included in the terminal; reading means for reading, from a storage unit included in a transfer assistance apparatus, information for accessing a candidate to be transferred; and means for acquiring the candidate to be transferred from a transfer source terminal based on the information for accessing the candidate to be transferred, and storing the candidate to be transferred in the selected storage destination.

Moreover, the invention can also be specified as a recording medium recording any of the programs.

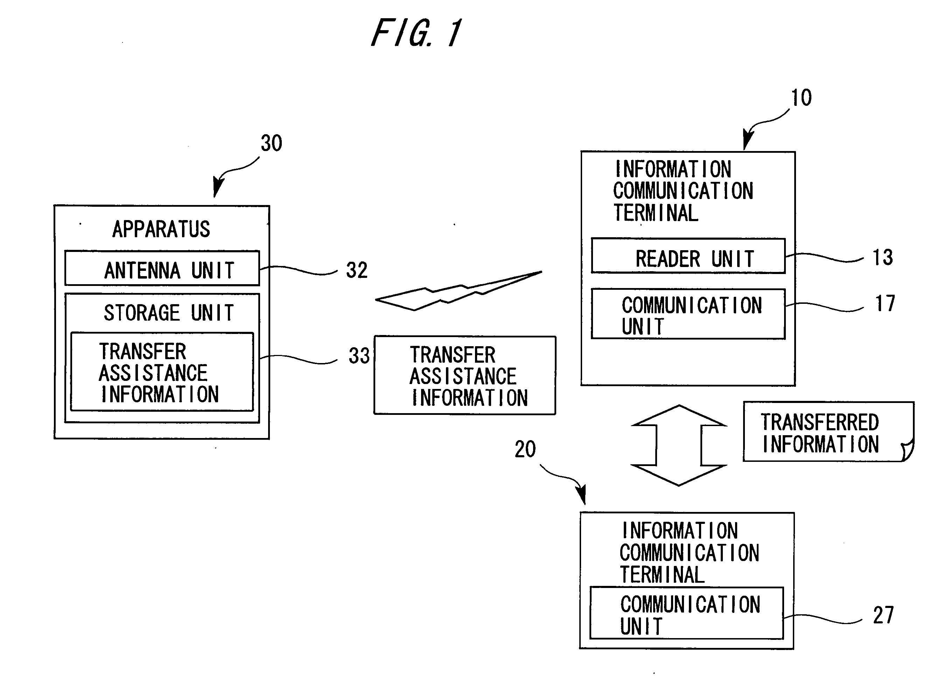

Next, the means for solving the problems will be specifically described while referring to FIG. 1.

FIG. 1 is a view for explaining a concept of the invention.

As shown in FIG. 1, in the invention, a transfer assistance apparatus 30 includes a storage unit 33 which stores transfer assistance information (information necessary for the data transfer), and an antenna unit 32 which transmits the transfer assistance information in the storage unit 33 by use of a received radio wave. An information communication terminal 10 includes a reader unit 13 which reads the transfer assistance information from the storage unit 33 of the transfer assistance apparatus 30 via the antenna unit 32 thereof, and a communication unit 17 which performs network communication .

Thus, it becomes possible for the terminal to read the information necessary for the data transfer (the transfer assistance information) from the storage unit 33 included in the transfer assistance apparatus 30, and to perform actual data transfer between the terminals via a network.

Specifically, data itself is not transferred through the transfer assistance apparatus (an electronic pen) unlike the conventional case, and the data itself is transferred between the terminals without passing through the transfer assistance apparatus 30. Only the transfer assistance information relatively small in capacity is stored in the transfer assistance apparatus 30.

Hence, according to the invention, it becomes possible to perform the information transfer between the terminals without being limited to the capacity of the memory 33 included in the transfer assistance apparatus 30 such as the electronic pen.

Specifically, information read by the terminal from the transfer assistance apparatus (for example, a RFID tag) is not a file itself to be transferred itself, but is information which assists the transfer (for example, an IP address of the terminal, path information to the file, and the like), and the actual information transfer is performed through the network including the wireless LAN and Bluetooth, and accordingly, there are no limitations on the amount of information to be transferred.

Moreover, when the storage unit 33 and the antenna unit 32 are composed of a non-contact IC chip such as the RFID tag, the power source by which the transfer assistance apparatus such as the electronic pen drives the devices thereof becomes unnecessary. Specifically, read and write of the storage unit 33 are performed by use of a voltage generated from the radio wave received by the antenna unit 32 (for example, of the RFID tag), and accordingly, the memory chip, the CPU, and the power source become unnecessary. Furthermore, thanks to downsizing of the RFID tag, a chip of which size is equal to or less than 0.5 mm square has also been realized already, and it is physically possible to incorporate the chip in the electronic pen or the like. In addition, this chip becomes advantageous as compared with the CPU and the memory also in terms of cost.

Specifically, the following two means are possible depending on whether the information of the transfer destination terminal or the information of the transfer source terminal is utilized as the transfer assistance information.

### (Case of utilizing information of transfer destination terminal)

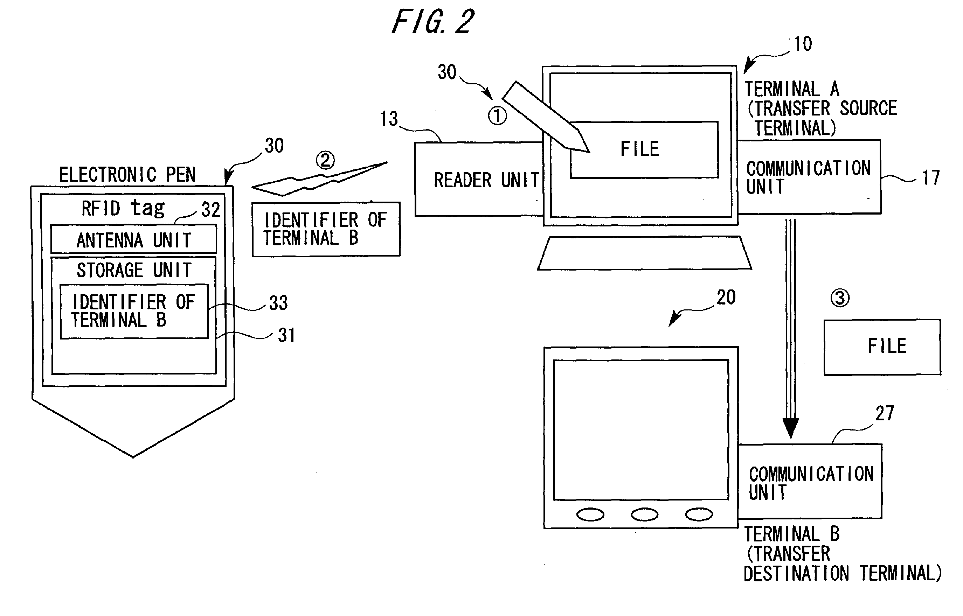

An operation in the case of utilizing the information of the transfer destination terminal as the transfer assistance information will be described below while referring to FIG. 2.

First, an identifier of the transfer destination terminal is stored beforehand in the storage unit 33 of the RFID tag 31 included in the transfer assistance apparatus (an electronic pen is illustrated in FIG. 2) 30. A file held by in a transfer source terminal 10 is indicated by use of this transfer assistance apparatus 30 ((1)). The reader unit 13 of the terminal reads an identifier of a transfer destination terminal 20 from the RFID tag 31 ((2)). The file indicated in (1) is transferred to the transfer destination terminal 20.

As described above, in the case of utilizing the information of the transfer destination terminal (the identifier of the transfer destination terminal is illustrated in FIG. 2) as the transfer assistance information, the file itself is not transferred through the transfer assistance apparatus (the electronic pen) unlike the conventional case, and the file itself is transferred between the terminals without passing through the transfer assistance apparatus 30. Only the transfer assistance information (the identifier of the transfer destination terminal is illustrated in FIG. 2) relatively small in capacity is stored in the transfer assistance apparatus (the electronic pen is illustrated in FIG. 2) 30.

Hence, in the case of utilizing the information of the transfer destination terminal (the identifier of the transfer destination terminal is illustrated in FIG. 2) as the transfer assistance information, it becomes possible to perform the information transfer between the terminals without being limited to the capacity of the memory 33 included in the transfer assistance apparatus (the electronic pen is illustrated in FIG. 2) 30.

### (Case of utilizing information of transfer source terminal)

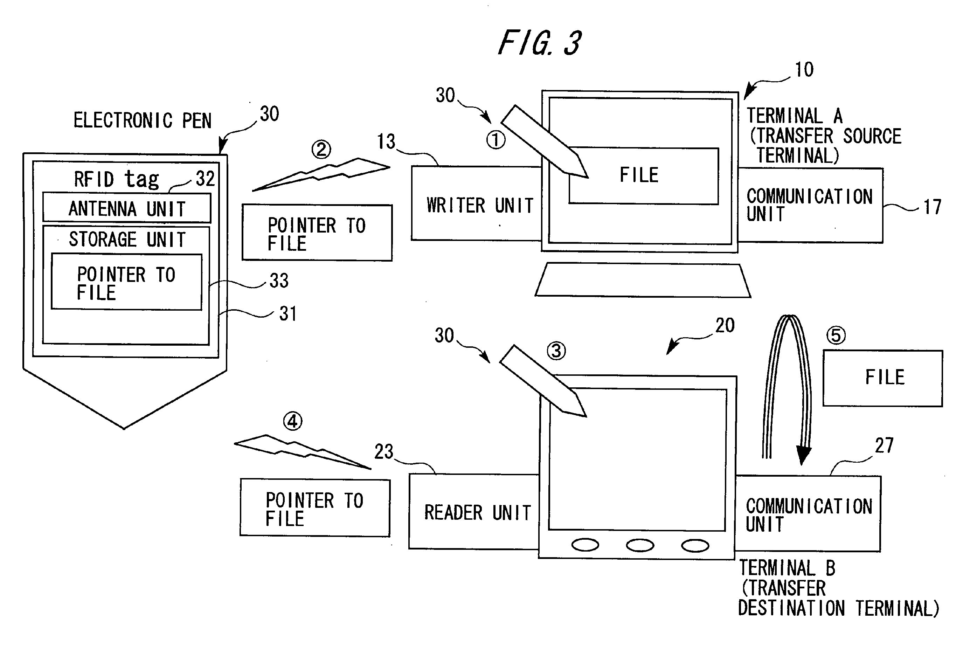

An operation in the case of utilizing the information of the transfer source terminal as the transfer assistance information will be described below while referring to FIG. 3.

Here, the transfer source terminal further includes a writer unit which writes the RFID tag. A file held by the transfer source terminal 10 is indicated by use of the transfer assistance apparatus (an electronic pen is illustrated in FIG. 3). The writer unit 13 of the transfer source terminal 10 writes pointer information to the file thus indicated into the storage unit 33 of the RFID tag 31 included in the transfer assistance apparatus (the electronic pen is illustrated in FIG. 3) ((2)) . A screen of the transfer destination terminal 20 is indicated by the same transfer assistance apparatus (the electronic pen is illustrated in FIG. 3) ((3)). A reader unit 23 of the transfer destination terminal 20 reads pointer information from the storage unit 33 of the RFID tag 33 included in the transfer assistance apparatus (the electronic pen is illustrated in FIG. 3) ((4)). A communication unit 27 of the transfer destination terminal 20 acquires the file from the transfer source terminal 10 according to the pointer information read by the communication unit 27 of the transfer destination terminal 20 ((5)).

As described above, in the case of utilizing the information of the transfer destination terminal (the pointer information to the indicated file is illustrated in FIG. 3) as the transfer assistance information, the file itself is not transferred through the transfer assistance apparatus (the electronic pen) unlike the conventional case, and the file itself is transferred between the terminals without passing through the transfer assistance apparatus 30. Only the transfer assistance information (the pointer information to the indicated file is illustrated in FIG. 3) relatively small in capacity is stored in the transfer assistance apparatus (the electronic pen is illustrated in FIG. 3) 30.

Hence, in the case of utilizing the information of the transfer destination terminal (the pointer information to the indicated file is illustrated in FIG. 3) as the transfer assistance information, it becomes possible to perform the information transfer between the terminals without being limited to the capacity of the memory 33 included in the transfer assistance apparatus (the electronic pen is illustrated in FIG. 3) 30.

Here, there are two points desired to be emphasized regarding the invention.

A first point is that the transfer assistance apparatus of the invention is not limited to the "electronic pen" incorporating the RFID tag therein. For example, the transfer assistance apparatus of the invention may be another input apparatus such as a cordless mouse as long as both of the terminals can utilize the identical input apparatus.

Moreover, a case where the RFID tag is incorporated in an apparatus other than the input apparatus is also possible. For example, there is not an input apparatus capable of incorporating the RFID tag therein in a terminal with a touch panel system to which an input is made by the finger. Accordingly, there are possibly a method of incorporating the RFID tag in the terminal itself, and a method of utilizing a peripheral arbitrary RFID tag (for example, in a cellular phone or a watch worn by a person). In this case, the cellular phone or the like, which includes the RFID tag, corresponds to the transfer assistance apparatus of the invention.

A second point is that what is transferred between the terminals in the invention is not limited to the "file". For example, when a user desires to transfer an environment of a desktop PC on which work has been made until then to a PDA because the user will go out, it is also possible to transmit information of an application executed on the desktop PC to the PDA and to provide the same environment onto the PDA. In this case, what is transferred between the terminals in the invention is an "execution environment".

According to the invention, when the information transfer is performed between the terminals by use of the transfer assistance apparatus (also referred to as a relay apparatus) such as the electronic pen, it becomes possible to perform the information transfer between the terminals without being limited to the capacity of the memory which the transfer assistance apparatus such as the electronic pen includes. Moreover, the power source by which the transfer assistance apparatus such as the electronic pen drives the devices thereof is not necessary.

Moreover, according to the invention, in the information transfer between the adjacent terminals, the transfer assistance apparatus (for example, the input apparatus) such as the electronic pen is "physically" moved between the terminals, and the information is transferred therebetween. Therefore, an intuitive information transfer method is realized. Furthermore, the use of the RFID tag for the transfer assistance apparatus (for example, the input apparatus) eliminates the necessity of the memory chip, the CPU, and the power source. Accordingly, an advantage is brought also in terms of cost. Furthermore, the invention adopts a system which passes the transfer assistance information through the transfer assistance apparatus (for example, the RFID tag), and performs the actual information transfer on the network. Accordingly, as compared with the conventional technology, there are no limitations on the amount of data to be transferred.

### DESCRIPTION OF THE DRAWINGS

FIG.1 is a view for explaining a concept (a principle) of the invention.
FIG.2 is a view for explaining a concept (Method 1) of the invention.
FIG.3 is a view for explaining a concept (Method 2) of the invention.
FIG.4 is a view for explaining a schematic system configuration of an inter-terminal information transfer system which is a first embodiment of the invention.
FIG.5 is a functional block diagram for mainly explaining apparatuses included in the inter-terminal information transfer system which is the first embodiment of the invention.
FIG.6 is a sequence diagram for mainly explaining operations of the apparatuses included in the inter-terminal information transfer system which is the first embodiment of the invention.
FIG.7 is a sequence diagram for mainly explaining operations of the apparatuses included in the inter-terminal information transfer system which is the first embodiment of the invention.
FIG.8 is a view for explaining a schematic system configuration of an inter-terminal information transfer system which is a second embodiment of the invention.
FIG.9 is a sequence diagram for mainly explaining operations of apparatuses included in the inter-terminal information transfer system which is the second embodiment of the invention.
FIG.10 is a sequence diagram for mainly explaining operations of the apparatuses included in the inter-terminal information transfer system which is the second embodiment of the invention.
FIG.11 is a view for explaining a modification example of the' inter-terminal information transfer system which is the second embodiment of the invention.
FIG.12 is a view for explaining a schematic system configuration of an inter-terminal information transfer system which is a third embodiment of the invention.
FIG.13 is a functional block diagram for mainly explaining functions of apparatuses included in the inter-terminal information transfer system which is the third embodiment of the invention.
FIG.14 is a sequence diagram for mainly explaining operations of the apparatuses included in the inter-terminal information transfer system which is the third embodiment of the invention.
FIG.15 is a sequence diagram for mainly explaining operations of the apparatuses included in the inter-terminal information transfer system which is the second embodiment of the invention.
FIG.16 is a view for explaining a schematic system configuration of an inter-terminal information transfer system which is a fourth embodiment of the invention.

### DETAILED DESCRIPTION OF THE INVENTION

An inter-terminal information transfer system as an embodiment of the invention will be described below while referring to the drawings.

### (First embodiment: File transfer (information of transfer destination terminal, electronic pen))

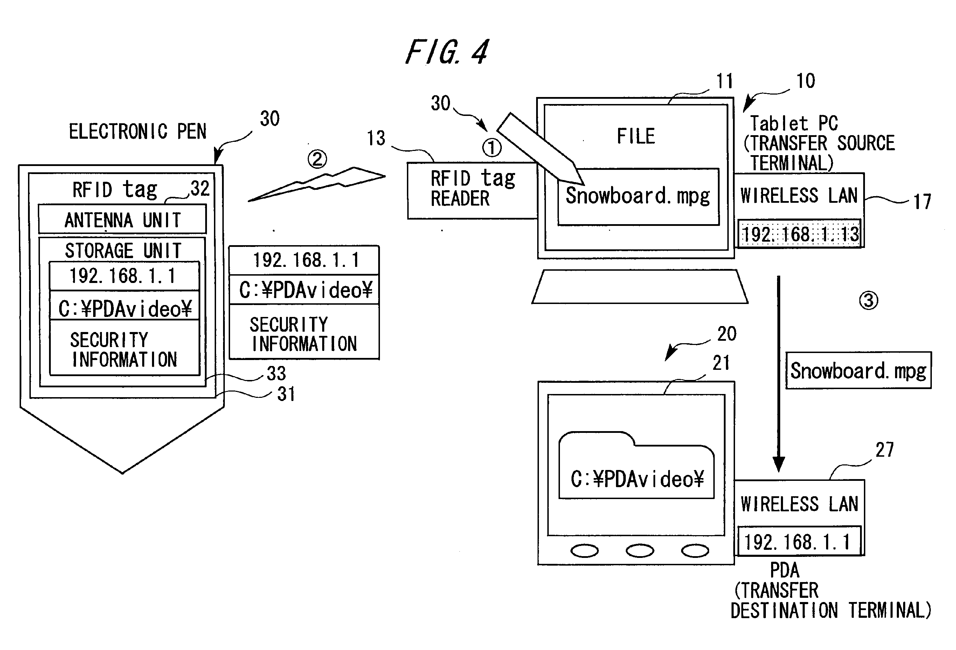

FIG. 4 is a view for explaining a first embodiment. As shown in FIG. 4, the first embodiment is an example of transferring a file from a transfer source terminal (a Tablet PC is illustrated in FIG. 4) 10 to a transfer destination terminal (a PDA is illustrated in FIG. 4) 20 by use of a transfer assistance apparatus (an electronic pen is illustrated in FIG. 4) 30.

### <(Entire) sequence of information transfer>

Sequences of information transfer will be described while referring to FIG. 4.

### (Selection of file)

First, from among files displayed on a display screen of a display unit 11 of a Tablet PC 10 (the files corresponding to the candidates to be transferred in the invention), a file which a user intends to transfer (Snowboard.mpg is illustrated in FIG. 4) is tapped by the electronic pen 30 of the PDA 20 ((1)). Thus, the file to be transferred (Snowboard.mpg is illustrated in FIG. 4) is selected.

On a general OS such as Linux and Windows (registered trade mark), when a displayed icon is single-clicked (tapped), the icon will be "selected," and when the icon is double-clicked (tapped), the icon will be "executed". In order to distinguish these instructions and an instruction of the information transfer of the invention from each other, for example, triple-click (tap) and the like are utilized. The premise of the invention is that the electronic pen 30 of the PDA 20 is also usable in the Tablet PC 10.

### (Acquisition of file transfer destination)

When the file (Snowboard.mpg is illustrated in FIG. 4) is selected, in the Tablet PC 10, a RFID tag reader 13 thereof reads stored information from the electronic pen 30 (a storage unit 33 of a RFID tag 31) which tapped the file a little while ago ((2)).

Into the electronic pen 30 (the storage unit 33 of the RFID tag 31), a pathname of a transfer destination folder (here, c:¥PDAvideo¥) and security information such as authentication setting and encryption setting (for example, encryption algorithm, a public key and the like) which a transfer destination terminal (here, the PDA 20) requires are written beforehand besides an IP address of a transfer destination (here, an IP address of the PDA 20: 192.168.1.1). Hence, these pieces of information (corresponding to the transfer assistance information in the invention) are read. Thus, the information of the file transfer destination is acquired.

### (File transfer)

When these pieces of information are read, in the Tablet PC 10, a communication unit 17 thereof accesses, by use of a wireless LAN, the IP address of the transfer destination (here, the IP address of the PDA 20: 192.168.1.1) read a little while ago, and transfers the file (Snowboard.mpg is illustrated in FIG. 4) tapped a little while ago to the destination folder (here, c:¥PDAvideo¥) designated according to the security information ((3)).

Thus, it becomes possible to transfer, from the Tablet PC (transfer source terminal) 10 to the PDA (transfer destination terminal) 20, the file (Snowboard.mpg is illustrated in FIG. 4) tapped by the electronic pen 30 of the PDA 20.

Note that, though the IP address is utilized as the identifier of the terminal in this embodiment, the identifier is not limited to the IP address in the invention, and identifiers of a name of the transfer destination terminal and a user name of the transfer destination may also be used. For example, it is also possible to utilize a computer name (Netbios name) in Windows (registered trademark). In this case, a name resolution from the computer name to the IP address becomes necessary. However, in Windows (registered trademark), some of name resolution means such as a name query by means of a broadcast packet and a query to a WINS server are proposed, and accordingly, the name resolution can be performed by utilizing these.

### <Schematic system configuration>

Next, respective apparatuses for realizing the inter-terminal information transfer system of this embodiment will be described. This system includes the transfer source terminal (the Tablet PC is illustrated in FIG. 4) 10, the transfer destination terminal (the PDA is illustrated in FIG. 4) 20, and the transfer assistance apparatus (the electronic pen is illustrated in FIG. 4) 30.

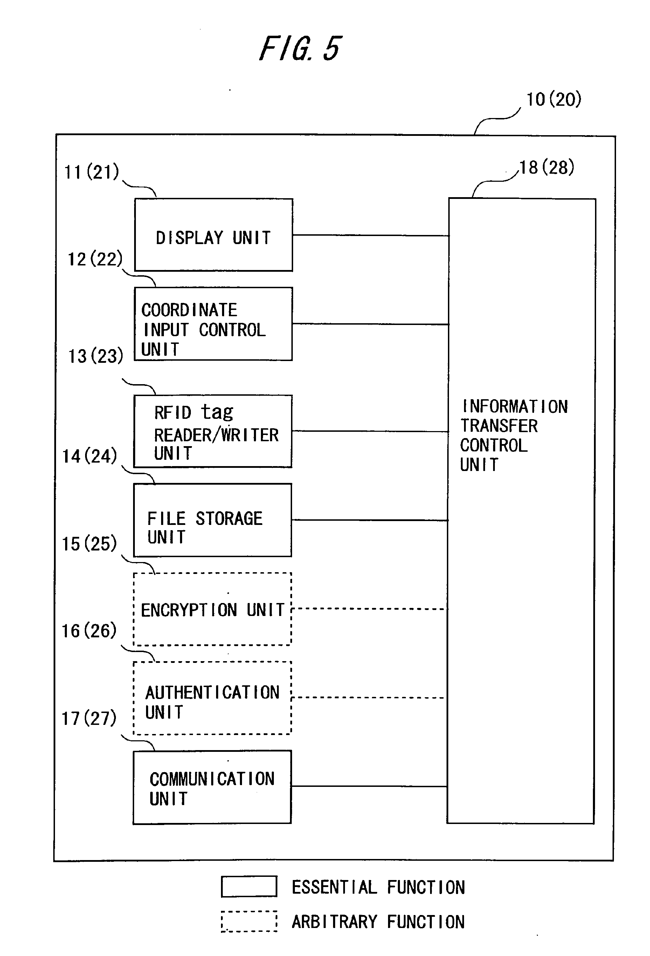

FIG. 5 is a block diagram for mainly explaining functions of the Tablet PC 10 and the PDA 20.

As shown in FIG. 5, the Tablet PC 10 includes a display unit 11, a coordinate input control unit 12, a RFID tag reader/writer unit 13, a file storage unit 14, an encryption unit 15, an authentication unit 16, a communication unit 17, an information transfer control unit 18, and the like. In a similar way, the PDA 20 also includes a display unit 21, a coordinate input control unit 22, a RFID tag reader/writer unit 23, a file storage unit 24, an encryption unit 25, an authentication unit 26, a communication unit 27, an information transfer control unit 28, and the like.

The display unit 11 (21) is an image display apparatus such as a liquid crystal display for displaying a pattern (a so-called icon) which represents a file or a folder stored in the file storage unit 14 (24) or an application under execution.

The coordinate input control unit 12 (22) is one for recognizing and controlling an input from the electronic pen 30 and the like. The coordinate input control unit 12 (22) includes an input apparatus such as a so-called touch panel provided on a display screen on the display unit 11 (21). When the icon or the like displayed on the display unit 11 (21) is selected (indicated, tapped and so on) through the touch panel, the coordinate input control unit 12 (22) acquires an identifier of the selected icon or the like.

The RFID tag reader/writer 13 (23) is one for reading and writing the RFID tag. The RFID tag reader/writer unit 13 (23) is an apparatus for reading the information from the electronic pen 30 (the storage unit 33 of the RFID tag 31) made closer thereto via the antenna unit 32 thereof, or writing the information into the electronic pen 30 (the storage unit 33 of the RFID tag 31) via the antenna unit 32 thereof.

The file storage unit 14 (24) is a storage apparatus such as a hard disk apparatus for storing a file (a file to be transferred to the transfer destination terminal, a file transferred from the transfer source, or the like).

The encryption unit 15 (25) is one for encrypting data (this is an arbitrary function). The encryption unit 15 (25) implements encryption processing according to a publicly known encryption algorithm for a file and the like inputted thereto, and outputs the file and the like which have been encrypted.

The authentication unit 16 (26) is one for performing authentication of the user or the terminal (this is an arbitrary function).

The communication unit 17 (27) is one for performing communication between the terminals on the network (network communication), and is, for example, a publicly known wireless communication apparatus using the wireless LAN or the Bluetooth.

The information transfer control unit 18 (29) is one for controlling the information transfer processing of the invention, and is a CPU, for example.

As shown in FIG. 4, the electronic pen 30 is a slim and tapered pen-type member, and has the RFID tag 31 attached (for example, incorporated) thereto. The RFID tag 31 includes the antenna unit 32 which transmits the information of the storage unit 33 thereof by use of the received radio wave, and the storage unit 33. In the storage unit 33, the identifier of the PDA 10 (for example, an IP address assigned to a wireless LAN interface when the communication unit 17 is the interface) is stored. The information stored in this storage unit 33 corresponds to the transfer assistance information of the invention. Specifically, the transfer assistance information is the information of the transfer destination terminal.

When the electronic pen (the RFID tag 31) 30 is made closer to the RFID tag reader/writer unit 13 (23), an electromotive force is generated on the RFID tag 31 side by the radio wave from the RFID tag reader/writer unit 13 (23) (according to the electromagnetic induction principle). A circuit of the electronic pen 30 operates by this electric power, and the transfer assistance information is read from the storage unit 33 of the RFID tag 31 via the antenna unit 32 thereof. Alternatively, the transfer assistance information is written into the storage unit 33 of the RFID tag 31 via the antenna unit 32 thereof.

### <Sequence in terminal interior (in transfer source terminal)>

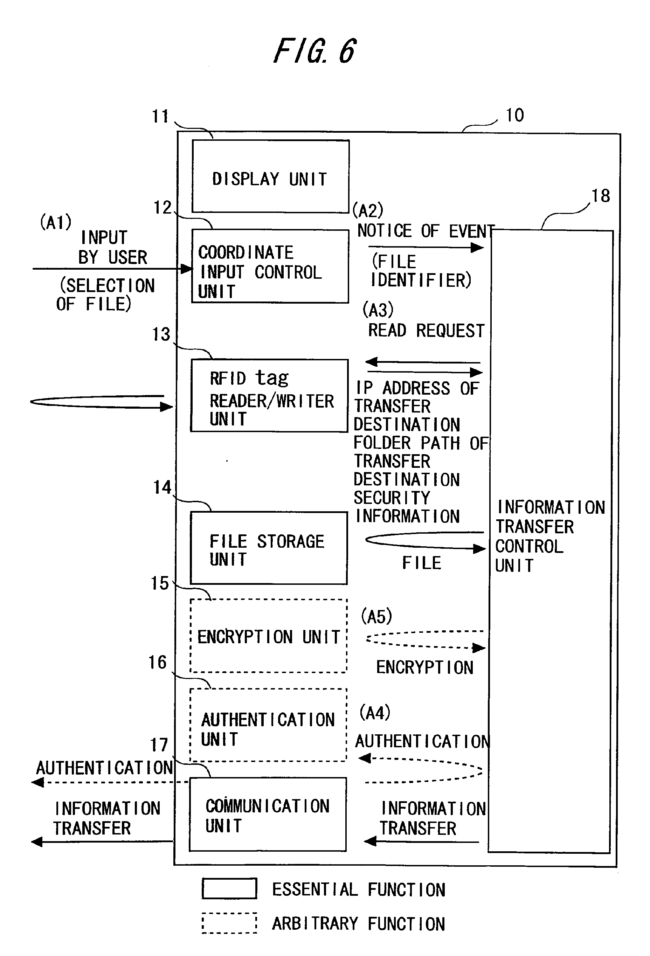

Next, sequences between respective functional blocks in the Tablet PC 10 with the configuration will be described while referring to FIG. 6. The processing corresponds to the sequences of the information transfer (1) to (3), which have already been described while referring to FIG. 4.

### (Selection of file)

First, from among the files displayed on the display screen of the display unit 11 of the Tablet PC 10 (the files corresponding to the candidates to be transferred in the invention), the file which the user intends to transfer (that is, the so-called icon representing the file) is tapped by the electronic pen 30 of the PDA (A1). Thus, the file to be transferred is selected.

### (Acquisition of file transfer destination)

When the file is selected, in the Tablet PC 10, the coordinate input control unit 12 thereof recognizes a tapped position on the display screen, acquires an identifier of the icon displayed on the tapped position (that is, the icon selected by the tapping), and notifies this to the information transfer control unit 18 (A2).

The information transfer control unit 18 controls the RFID tag reader unit 13 with the notice taken as a cue. Thus, the RFID tag reader unit 13 reads the stored information (the IP address of the transfer destination, a folder path, the security (authentication and encryption) information) from the electronic pen 30 (the storage unit 33 of the RFID tag 31) which tapped the display screen a little while ago (A3). Thus, the information of the file transfer destination, that is, the transfer assistance information is acquired.

### (File transfer)

When these pieces of information are read, the information transfer control unit 18 controls the authentication unit 16 according to needs. Thus, the authentication unit 16 performs authentication for the PDA 20 based on the security information read a little while ago. When the authentication is successful, in the Tablet PC 10, the information transfer control unit 18 thereof reads the file specified by the file identifier notified in (A2) from the file storage unit 14, and transfers this file through the communication unit 17 to a transfer destination folder of the PDA 20 as the transfer destination terminal notified in (A2) (after encrypting the' file in the encryption unit 16 according to needs).

### <Sequence in terminal interior (in transfer destination terminal)>

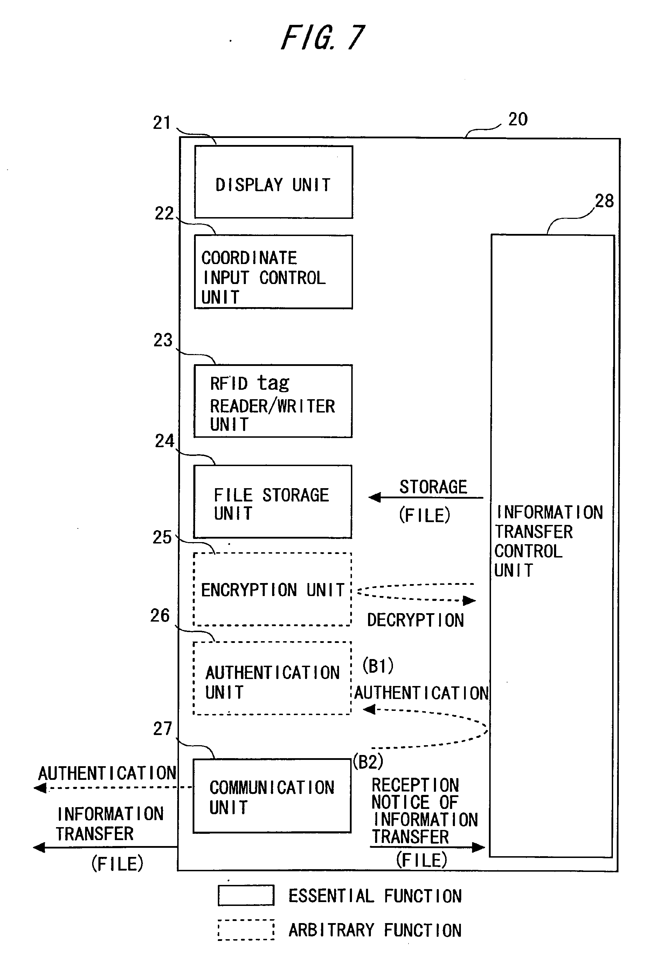

Next, sequences between the respective functional blocks in the PDA (the transfer destination terminal) 20 with the configuration will be described while referring to FIG. 7. The processing corresponds to the sequence of the information transfer (3), which has already been described while referring to FIG. 4.

Upon receiving an authentication request from the Tablet PC (the transfer source terminal) 10, in the PDA 20, the authentication unit 26 thereof processes the authentication request, and returns a response (B1). When this authentication is successful, the communication unit 17 of the Tablet PC 10 transfers the file to the PDA 20. In the PDA 20, the communication unit 27 thereof receives the file transferred from the Tablet PC (the transfer source terminal) 10, and the information transfer control unit 28 thereof stores the received file in the file storage unit 24 (after decrypting the file in the encryption unit 25 according to needs).

Thus, it becomes possible to transfer, from the Tablet PC (transfer source terminal) 10 to the PDA (transfer destination terminal) 20, the file (Snowboard.mpg is illustrated in FIG. 4) tapped by the electronic pen 30 of the PDA 20.

### (Second embodiment: File transfer (information of transfer destination terminal, electronic pen))

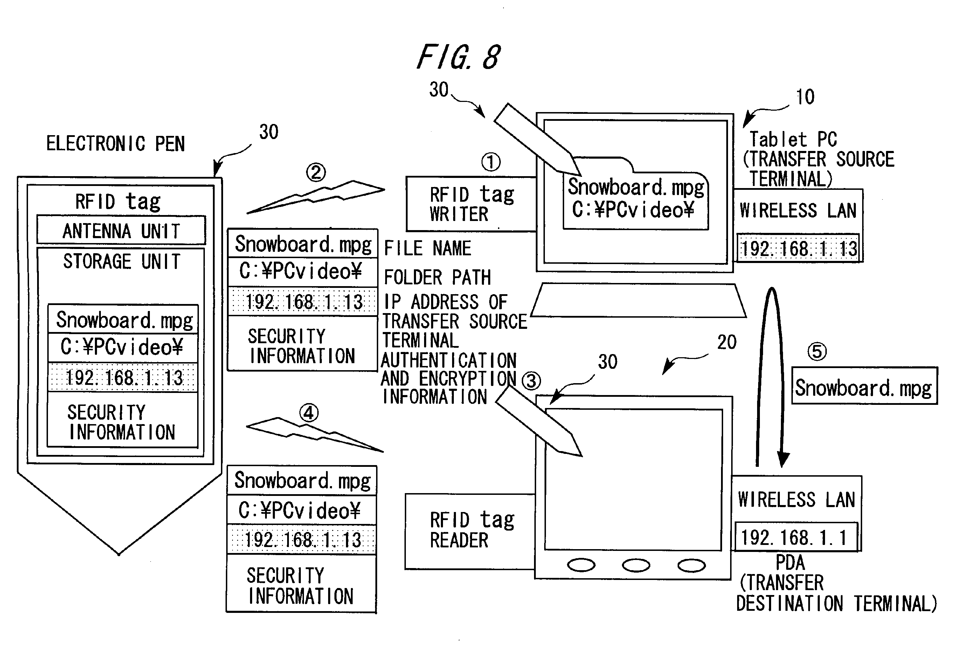

FIG. 8 is a view for explaining a second embodiment. As shown in FIG. 8, the second embodiment is an example of transferring a file from a transfer source terminal (a Tablet PC is illustrated in FIG. 8) 10 to a transfer destination terminal (a PDA 20 is illustrated in FIG. 8) by use of a transfer assistance apparatus (an electronic pen is illustrated in FIG. 8) 30.

In this embodiment, the IP address of the transfer destination terminal is not stored beforehand in the RFID tag as in the first embodiment, but at the time of selecting the file to be transferred on the screen of the transfer source terminal, the pointer information such as the IP address of the transfer source and the file name is written into the RFID tag. Specifically, the transfer assistance information is the information in the transfer source terminal.

### <Sequence of information transfer>

Sequences of information transfer will be described while referring to FIG. 8.

### (Selection of file)

First, from among the files displayed on the display screen of the display unit 11 of the Tablet PC 10 (the files corresponding to the candidates to be transferred in the invention), the file which the user intends to transfer (Snowboard.mpg is illustrated in FIG. 8) is tapped by the electronic pen 30 ((1)). Thus, the file to be transferred (Snowboard.mpg is illustrated in FIG. 8) is selected.

### (Write of file transfer source)

When the file (Snowboard.mpg is illustrated in FIG. 8) is selected, in the Tablet PC 10, the RFID tag writer 13 thereof writes the transfer assistance information (the file name, a file path, an IP address of a wireless LAN interface, security information, and the like) of the file tapped by the electronic pen 30 a little while ago into the electronic pen 30 (the storage unit 33 of the RFID tag 31). Here, as shown in FIG. 8, the file name (Snowboard.mpg), the folder path (C:¥Pcvideo¥), the IP address (192.168.1.13) of the wireless LAN interface, and the security information are written into the electronic pen 30 (the storage unit 33 of the RFID tag 31).

### (Acquisition of file transfer source)

Next, in the PDA (the transfer destination terminal) 20, from among folders displayed on a display screen of the display unit 21 thereof (the files corresponding to candidates for a storage destination in the invention), a folder which the user intends to set as the storage destination is tapped by the same electronic pen 30 as the one which tapped the file a little while ago ((3)). Thus, a storage destination folder is selected.

When the storage destination folder is selected, in the PDA 20, a RFID tag reader 23 thereof reads the stored information from the electronic pen 30 (the storage unit 33 of the RFID tag 31) ((4)).

The file name (Snowboard.mpg), the folder path (C:¥Pcvideo¥), the IP address (192.168.1.13) of the wireless LAN interface were written into the electronic pen 30 (the storage unit 33 of the RFID tag 31) in (2) a little while ago. Hence, these pieces of information (corresponding to the transfer assistance information in the invention) are read. Thus, the information of the file transfer destination is acquired.

### (File transfer)

When these pieces of information are read, in the PDA 20, a communication unit 27 thereof accesses, by use of a wireless LAN, the IP address (here, the IP address of the Tablet PC 10: 192.168.1.13) read a little while ago, acquires the file tapped in (1) a little while ago according to the security information, and stores the file in the folder tapped in (3) ((5)).

Thus, it becomes possible to transfer, from the Tablet PC (transfer source terminal) 10 to the PDA (transfer destination terminal) 20, the file (Snowboard.mpg is illustrated in FIG. 8) tapped by the electronic pen 30.

### <Schematic system configuration>

Next, respective apparatuses for realizing the inter-terminal information transfer system of this embodiment will be described. This system includes the Tablet PC (the transfer source terminal) 10, the PDA (the transfer destination terminal) 20, and the electronic pen 30 as in the first embodiment. Tablet PC 10, PDA 20, and the electronic pen 30 have similar functions as those in the first embodiment, and the description thereof is omitted.

### <Sequence in terminal interior (in transfer source terminal)>

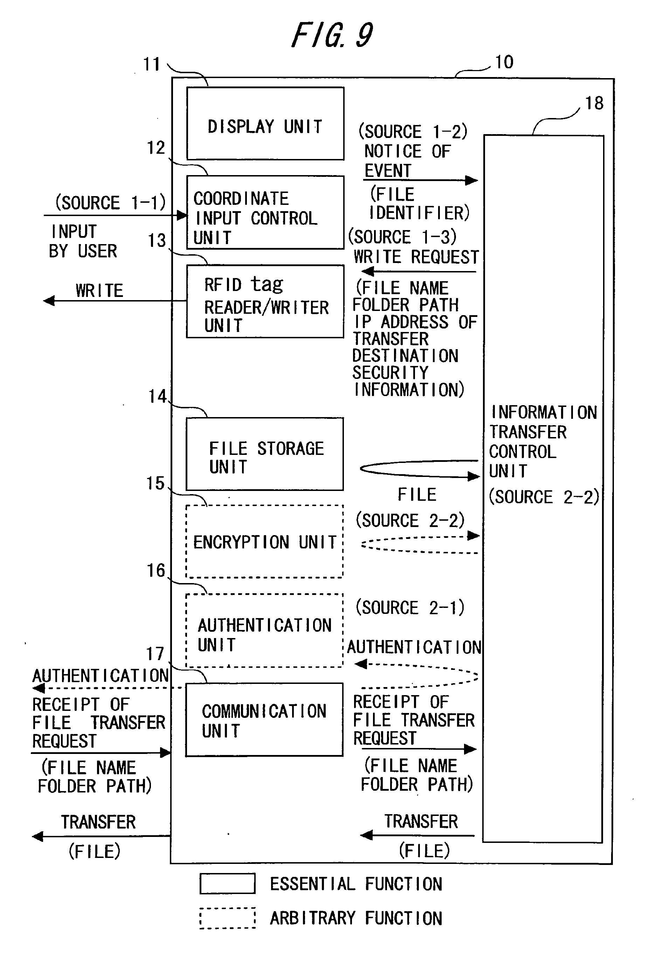

Next, sequences between the respective functional blocks in the Tablet PC (the transfer source terminal) 10 in this embodiment will be described while referring to FIG. 9. The processing corresponds to the sequences of the information transfer (1) and (2), which have already been described while referring to FIG. 8.

### (Selection of file)

First, in the Tablet PC 10, from among the files displayed on the display screen of the display unit 11 of the Tablet PC 10 (the files corresponding to the candidates to be transferred in the invention), the file which the user intends to transfer is tapped by the electronic pen 30 (1-1). Thus, the file to be transferred is selected.

### (Write of file transfer source)

When the file is selected, in the Tablet PC 10, the coordinate input control unit 12 recognizes a tapped position on the display screen, acquires an identifier of the icon displayed on the tapped position (that is, the icon selected by the tapping), and notifies this to the information transfer control unit 18 (1-2).

The information transfer control unit 18 controls the RFID tag writer unit 13 with the notice taken as a cue. Thus, the RFID tag reader unit 13 writes the transfer assistance information (the file name, the folder path, the IP address of the transfer source, and the security information) into the electronic pen 30 (the storage unit 33 of the RFID tag 31) which tapped the display screen a little while ago (1-3). The transfer assistance information is information for assisting the transfer of the icon tapped a little while ago.

### <Sequence in terminal interior (in transfer destination terminal)>

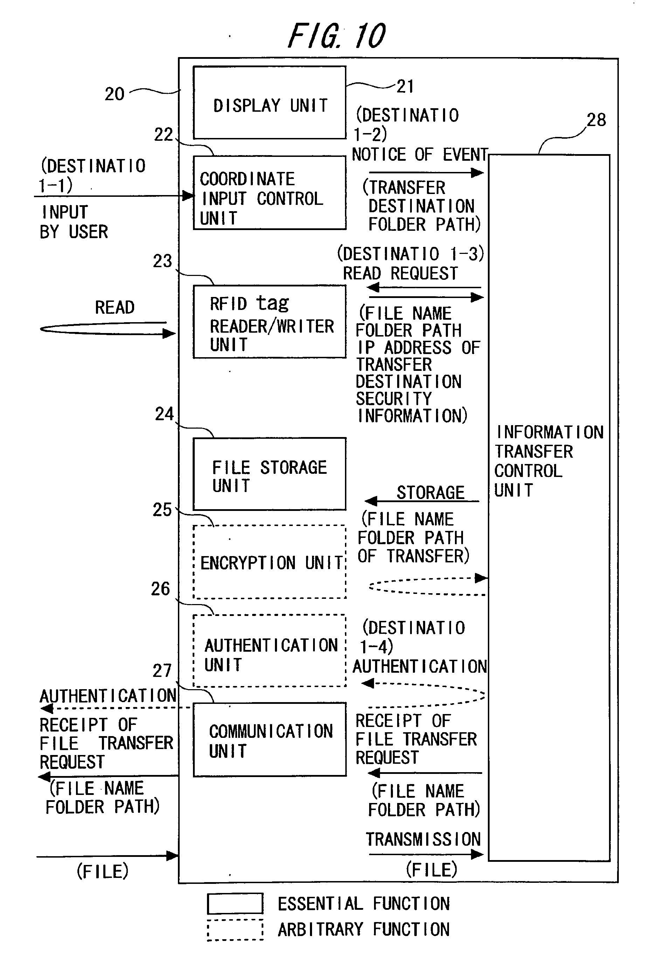

Next, sequences between the respective functional blocks in the PDA (the transfer destination terminal) 20 in this embodiment will be described while referring to FIG. 10. The processing corresponds to the sequences of the information transfer (3) to (5), which have already been described while referring to FIG. 8.

### (Acquisition of file transfer source)

Next, in the PDA (the transfer destination terminal) 20, from among folders displayed on a display screen of the display unit 21 thereof (candidates for a storage destination in the invention), a folder which the user intends to set as the storage destination is tapped by the same electronic pen 30 as the one which tapped the file a little while ago (1-1). Thus, a storage destination folder is selected.

When the storage destination folder is tapped, in the PDA 20, the coordinate input control unit 22 thereof recognizes a tapped position on the display screen, acquires an identifier of the folder displayed on the tapped position (that is, the folder selected by the tapping), and notifies this to the information transfer control unit 28 (1-2).

The information transfer control unit 28 controls the RFID tag reader unit 23 with the notice taken as a cue. Thus, the RFID tag reader unit 23 reads the file name, the folder path, the security information, and the IP address of the transfer source from the electronic pen 30 (the storage unit 33 of the RFID tag 31) which tapped the display screen a little while ago (A3). Thus, the information of the file transfer source, that is, the transfer assistance information is acquired.

### (File transfer)

When these pieces of information are read, the information transfer control unit 28 controls the authentication unit 26 according to needs. Thus, the authentication unit 26 performs authentication for the Tablet PC 10 based on the security information read a little while ago (1-4). When the authentication is successful, in the PDA 20, the information transfer control unit 28 thereof transmits a file transfer request through the communication unit 27 to the Tablet PC 10 (the IP address of the transfer source read a little while ago). In other words, in the PDA 20, the communication unit 27 thereof accesses, by use of a wireless LAN, the IP address (here, the IP address of the Tablet PC 10: 192.168.1.13) read a little while ago, acquires the file tapped a little while ago in (1-1) in FIG. 9 from the Tablet PC 10 according to the security information, and stores the file in the folder tapped in (1-1) in FIG. 10 (after decrypting the file in the encryption unit 25 according to needs).

### <Sequence of terminal interior (in transfer source terminal)>

Processing to be described below corresponds to the sequence of the information transfer (5), which has already been described while referring to FIG. 8.

Upon receiving an authentication request from the PDA 20, in the Tablet PC 10, the authentication unit 16 thereof processes the authentication request, and returns a response (2-1). When this authentication is successful, the information transfer control unit 18 of the Tablet PC 10 reads, in response to the file transfer request received from the PDA 20, a file corresponding thereto from the file storage unit 24, and transfers this file to the PDA 20 through the communication unit 17 (after encrypting the file in the encryption unit 16 according to needs).

Thus, it becomes possible to transfer, from the Tablet PC (transfer source terminal) 10 to the PDA (transfer destination terminal) 20, the file tapped by the electronic pen 30.

### (Modification example of second embodiment: File transfer (information of transfer source terminal, cellular phone))

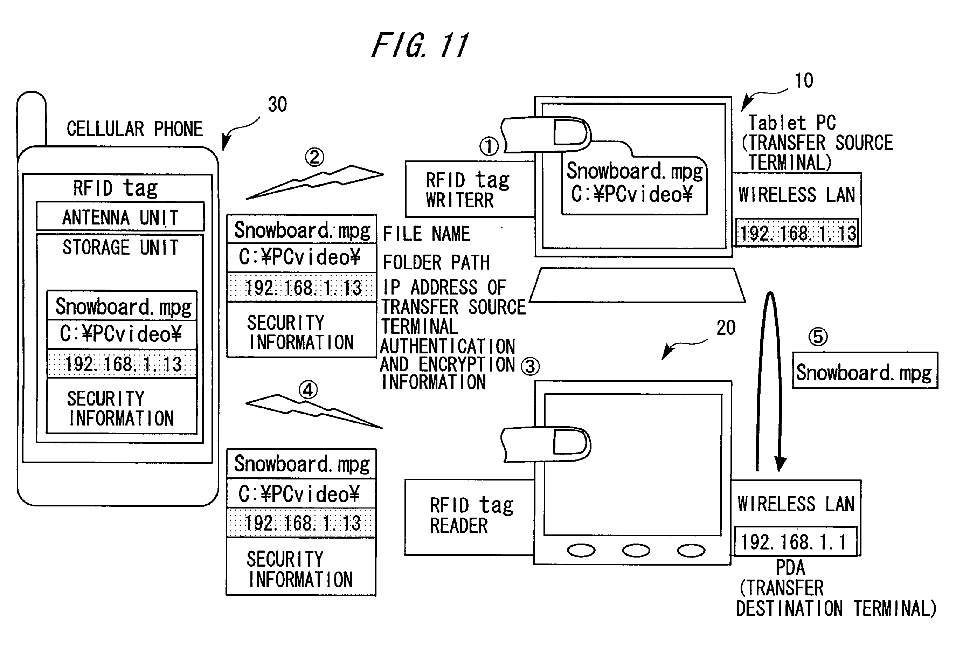

FIG. 11 is a view for explaining a modification example of the second embodiment. As shown in FIG. 11, this modification example is an example of transferring the file from the transfer source terminal (the Tablet PC is illustrated in FIG. 11) 10 to the transfer destination terminal (the PDA is illustrated in FIG. 11) 20 by use of a transfer assistance apparatus (a cellular phone is illustrated in FIG. 8).

In this modification example, unlike the first embodiment and the second embodiment, the terminal to which the electronic pen 30 is attached is not assumed, but a terminal of the touch panel system, to which an input is made by the finger, is assumed. Hence, the RFID tag cannot be incorporated in the input apparatus. Accordingly, this modification example shows a method of notifying the transfer assistance information by utilizing an arbitrary RFID tag (a RFID tag which is included in a cellular phone is illustrated in FIG. 11) which is located in the periphery of the terminal.

In this modification example, the RFID tag is incorporated in the cellular phone. Here, it is premised that it is possible for the reader/writer unit of the terminal to perform the write/read also in the RFID tag incorporated in the cellular phone.

Sequences of the information transfer will be described while referring to FIG. 11. Basically, these sequences are sequences equivalent to those of the second embodiment.

### <Sequence of information transfer>

### (Selection of file)

First, from among the files displayed on the display screen of the display unit 11 of the Tablet PC 10 (the files corresponding to the candidates to be transferred in the invention), the file which the user intends to transfer (Snowboard.mpg is illustrated in FIG. 11) is tapped by the finger ((1)). Thus, the file to be transferred is selected.

### (Write of file transfer source)

When the file is selected, in the Tablet PC 10, the RFID tag writer 13 thereof writes transfer assistance information (a file name, a file path, an IP address of a wireless LAN interface, security information, and the like) of the file tapped a little while ago into the cellular phone (a storage unit of the RFID tag included in the cellular phone) ((2)).

Next, in the PDA (the transfer destination terminal) 20, from among folders displayed on a display screen of the display unit 21 thereof (the files corresponding to the candidates for the storage destination in the invention), a folder which the user intends to set as the storage destination is tapped by the finger ((3)). Thus, a storage destination folder is selected.

When the storage destination folder is selected, in the PDA 20, the RFID tag reader 23 thereof reads the stored information (the file name, the file path, the IP address of the wireless LAN interface, the security information, and the like) from the electronic pen 30 (the storage unit of the RFID tag) ((4)).

### (File transfer)

When these pieces of information are read, in the PDA 20, a communication unit 27 thereof accesses, by use of a wireless LAN, the IP address read a little while ago, acquires the file tapped a little while ago (1) from the Tablet PC 10 according to the security information, and stores the folder tapped in ((3)).

Thus, from the Tablet PC (transfer source terminal) 10 to the PDA (transfer destination terminal) 20, it becomes possible to transfer the file (Snowboard.mpg is illustrated in FIG. 11) tapped by the finger.

Note that internal sequences of the terminal in this embodiment are the same as those of the second embodiment, and accordingly, description thereof will be omitted.

### (Third embodiment: Outline of execution environment transfer (information of transfer destination terminal, electronic pen))

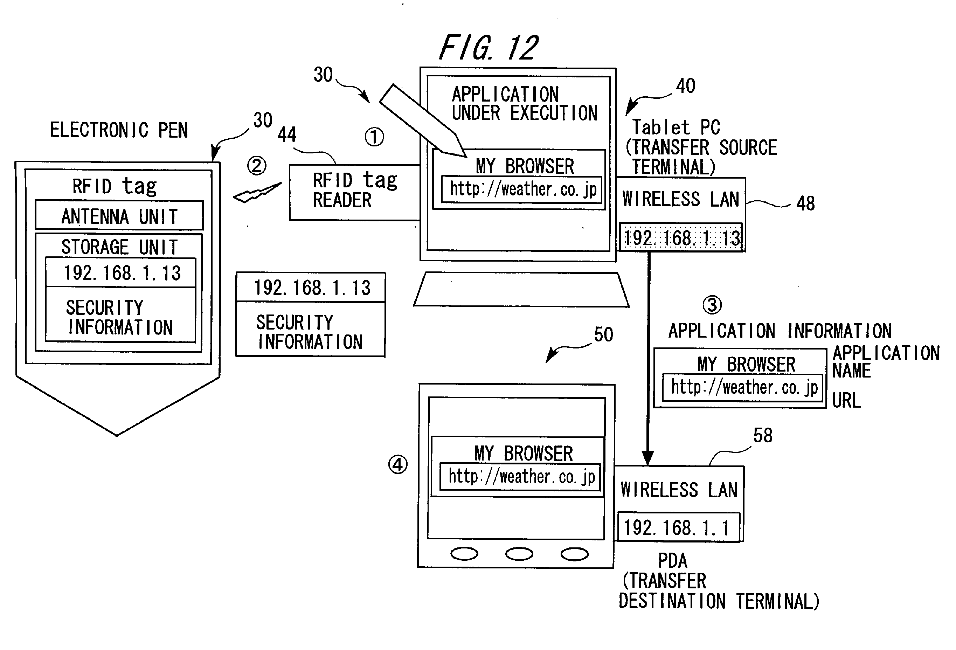

FIG. 12 is a view for explaining a third embodiment. As shown in FIG. 12, the third embodiment is an example of transferring a Web browser environment on which work has been performed in a transfer source terminal (a Tablet PC 40 is illustrated in FIG. 12) to a transfer destination terminal (a PDA 50 is illustrated in FIG. 12) by use of a transfer assistance apparatus (the electronic pen 30 is illustrated in FIG. 12).

In this embodiment, an IP address of the PDA 50 is stored in a RFID tag incorporated in the electronic pen 30 as in the first embodiment.

### <Sequence of information transfer>

Sequences of information transfer will be described while referring to FIG. 12.

### (Selection of file)

First, from among applications displayed on a display screen of a display unit 41 of the Tablet PC 40 (the applications corresponding to the candidates to be transferred in the invention), an application which the user intends to transfer (a Web browser is illustrated in FIG. 12) is tapped by the electronic pen 30 ((1)). Thus, the application to be transferred (the Web browser is illustrated in FIG. 12) is selected.

### (Acquisition of transfer destination)

When the Web browser is selected, in the Tablet PC 40, a RFID tag reader 43 thereof reads the IP address and security information from the electronic pen 30 (a storage unit 33 of a RFID tag 31) which tapped the application a little while ago ((2)).

Into the electronic pen 30 (the storage unit 33 of the RFID tag 31), security information such as authentication setting and encryption setting (for example, encryption algorithm, a public key and the like) which a transfer destination terminal (here, the PDA 20) requires are written beforehand besides an IP address of a transfer destination (here, an IP address of the PDA 20: 192.168.1.1). Hence, these pieces of information (corresponding to the transfer assistance information in the invention) are read. Thus, the information of the file transfer destination is acquired.

### (Transfer)

When these pieces of information are read, in the Tablet PC 40, a communication unit 47 thereof accesses, by use of a wireless LAN, the IP address of the transfer destination (here, the IP address of the PDA 50: 192.168.1.1) read a little while ago, and transfers a name of the application (identification information or the like) indicated in (1) and information of the operation environment (a URL which the Web browser opens, or the like) to the PDA 50 according to security setting ((3)).

In the PDA 50, a communication unit 57 thereof receives the application name and the information of the operation environment, which have been transferred from the Tablet PC 40, executes the application (here, the Web browser), and accesses the same URL which is the information of the operation environment.

Thus, it becomes possible to transfer, to the PDA 50, the Web browser environment on which work has been performed in the Tablet PC 40.

### <Schematic system configuration>

Next, respective apparatuses for realizing the inter-terminal information transfer system of this embodiment will be described. This system includes the transfer source terminal (the Tablet PC is illustrated in FIG. 12) 40, the transfer destination terminal (the PDA is illustrated in FIG. 12) 50, and the transfer assistance apparatus (the electronic pen is illustrated in FIG. 12) 30.

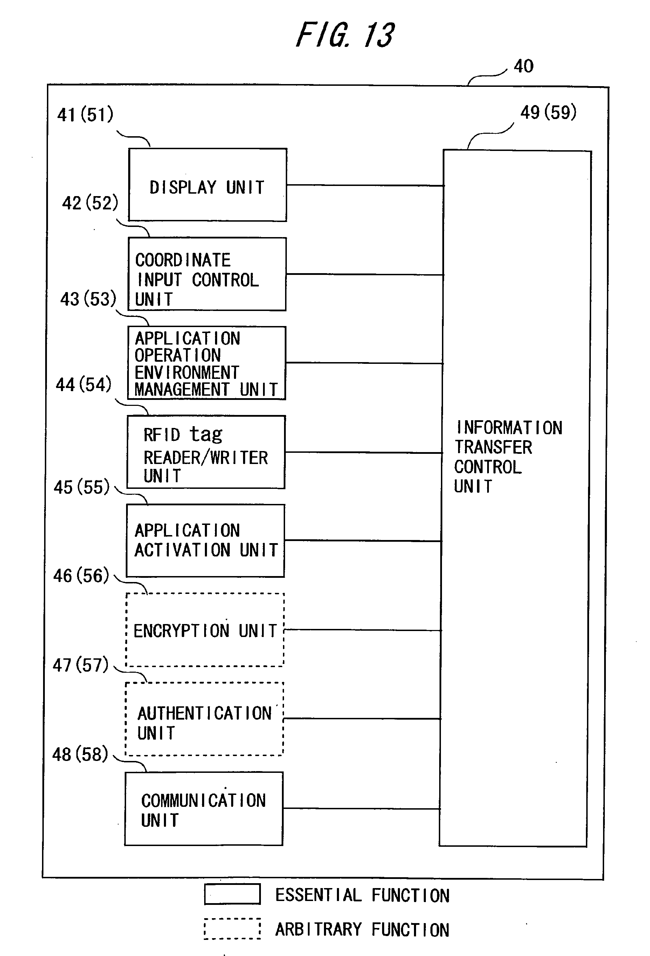

FIG. 13 is a block diagram for mainly explaining functions of the Tablet PC 40 and the PDA 50.

As shown in FIG. 13, the Tablet PC 40 includes the display unit 41, a coordinate input control unit 42, an application operation environment management unit 43, a RFID tag reader/writer unit 44, an application activation unit 45, an encryption unit 46, an authentication unit 47, a communication unit 48, an information transfer control unit 49, and the like. In a similar way, the PDA 50 also includes a display unit 51, a coordinate input control unit 52, an application operation environment management unit 53, a RFID tag reader/writer unit 54, an application activation unit 55, an encryption unit 56, an authentication unit 57, a communication unit 58, an information transfer control unit 59, and the like.

The display unit 41 (51) is an image display apparatus such as a liquid crystal display for displaying a pattern (a so-called icon) which represents a file or folder stored in a file storage unit (not shown), an application under execution, or the like.

The coordinate input control unit 42 (52) is one for recognizing and controlling an input from the electronic pen 30 and the like. The coordinate input control unit 42 (52) includes an input apparatus such as a so-called touch panel provided on a display screen on the display unit 41 (51), and when the icon, the application, or the like displayed on the display unit 41 (51) is selected (indicated, tapped and so on) through the touch panel, acquires an identifier of the selected icon, application, or the like.

The application operation environment management unit 43 (53) is one for managing an operation environment of an application under execution (for example, a URL now under display when the application under execution is a WWW browser).

The RFID tag reader/writer 44 (54) is one for reading and writing the RFID tag. The RFID tag reader/writer unit 44 (54) is an apparatus for reading the information from the electronic pen 30 (the storage unit 33 of the RFID tag 31) made closer thereto via an antenna unit 32 thereof or writing the information into the electronic pen 30 (the storage unit 33 of the RFID tag 31) via the antenna unit 32 thereof.

The application activation unit 45 (55) is one for activating the application.

The encryption unit 46 (56) is one for encrypting data (this is an arbitrary function). The encryption unit 46 (56) implements encryption processing according to a publicly known encryption algorithm for a file and the like inputted thereto, and outputs the file and the like which have been encrypted.

The authentication unit 47 (57) is one for performing authentication of the user or the terminal (this is an arbitrary function).

The communication unit 48 (58) is one for performing communication between the terminals on the network (network communication), and for example, is a publicly known wireless communication apparatus using the wireless LAN or Bluetooth.

The information transfer control unit 49 (59) is one for controlling the information transfer processing of the invention, and for example, is a CPU.

Note that, though the file storage unit is not shown, each of the apparatuses 40 and 50 includes the file storage unit as in the first and second embodiments.

### <Sequence of terminal interior (in transfer source terminal)>

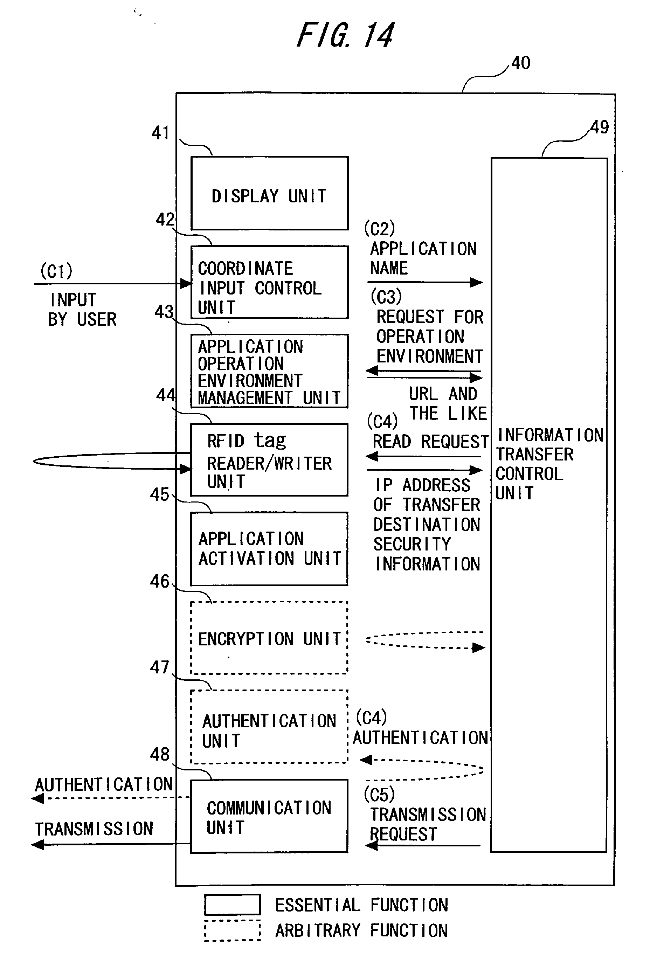

Next, sequences between the respective functional blocks in the Tablet PC 40 with the configuration will be described while referring to FIG. 14. The processing corresponds to the sequences of the information transfer (1) to (3), which have already been described while referring to FIG. 12.

### (Selection of file)

First, from among applications displayed on the display screen of the display unit 41 of the Tablet PC 40 (the applications corresponding to the candidates to be transferred in the invention), the application which the user intends to transfer (the Web browser is illustrated in FIG. 12) is tapped by the electronic pen 30 ((C1)). Thus, the application to be transferred (the Web browser is illustrated in FIG. 12) is selected.

### (Acquisition of file transfer destination)

When the application is selected, in the Tablet PC 40, the coordinate input control unit 42 thereof recognizes a tapped position on the display screen, acquires an identifier (for example, an application name) of the application displayed on the tapped position (here, the Web browser selected by the tapping), and notifies this to the information transfer control unit 48 (C2).

The information transfer control unit 48 acquires, from the application operation environment management unit 53, an operation environment of the application (a URL which the Web browser as the application is opening, and the like) specified by the notified identifier (C3) . Note that, in the general OS including Windows (registered trademark) and Unix (registered trademark), an API acquiring the URL which the Web browser is accessing at present from the OS is prepared as standard equipment.

Moreover, the information transfer control unit 48 controls the RFID tag reader unit 44 with the notice taken as.a cue. Thus, the RFID tag reader unit 44 reads the IP address of the transfer destination and the security information from the electronic pen 30 (the storage unit 33 of the RFID tag 31) which tapped the display screen a little while ago. Thus, the transfer assistance information is acquired.

### (Transfer)

When these pieces of information are read, the information transfer control unit 48 controls the authentication unit 47 according to needs. Thus, the authentication unit 47 performs authentication for the PDA 50 based on the security information read a little while ago. When the authentication is successful, in the Tablet PC 40, the information transfer control unit 49 thereof transfers the identifier (the application name or the like) and the information of the operation environment (the URL or the like), which are notified in (C2) and (C3), to the PDA 50 (after encrypting the identifier and the information in the encryption unit 46 according to needs) (C5).

### <Sequence of terminal interior (in transfer destination terminal)>

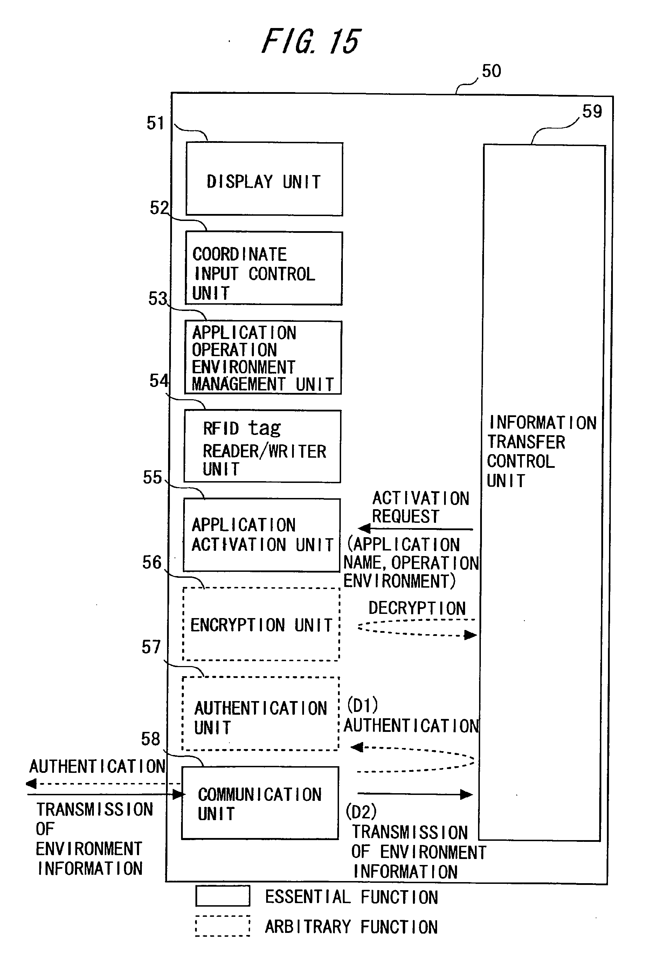

Next, sequences between the respective functional blocks in the PDA (the transfer destination terminal) 50 with the configuration will be described while referring to FIG. 15. The processing corresponds to the sequence of the information transfer (4), which has already been described while referring to FIG. 12.

Upon receiving an authentication request from the Tablet PC 40, in the PDA 50, the authentication unit 57 thereof processes the authentication request, and sends a response (D1). Moreover, upon receiving the identifier (the application name or the like) and the information of the operation environment (the URL or the like), in the PDA 50, the information transfer control unit 59 thereof executes the Web browser (the application designated by the identifier received from the Tablet PC 40) in the application activation unit 55 based on the information of the execution environment from the Tablet PC 40, which has been received through the communication unit 58, and accesses the same URL (the information of the execution environment, which has been received from the Tablet PC 40) .

Thus, it becomes possible to transfer the Web browser environment on which the work has been performed in the transfer source terminal (the Tablet PC 40 is illustrated in FIG. 12) to the transfer destination terminal (the PDA 50 is illustrated in FIG. 12) by use of the transfer assistance apparatus (the electronic pen 30 is illustrated in FIG. 12).

### (Fourth embodiment: Outline of execution environment transfer (information of transfer source terminal, electronic pen))

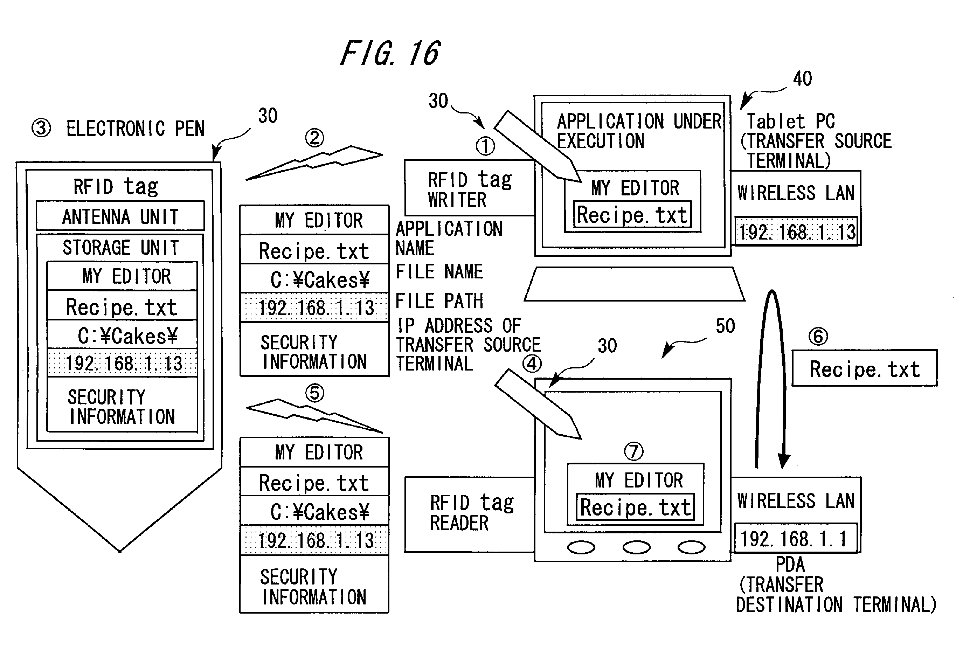

FIG. 16 is a view for explaining a fourth embodiment. As shown in FIG. 16, the fourth embodiment is an example of transferring a Text Editor environment on which work has been performed in the transfer source terminal (a Tablet PC is illustrated in FIG. 16) 40 to the transfer destination terminal (a PDA is illustrated in FIG. 16) 50 by use of the transfer assistance apparatus (an electronic pen is illustrated in FIG. 16) 30.

In this embodiment, at the time of selecting an application to be transferred, application information, pointer information to an active file, and the like are written into the RFID tag. Specifically, the transfer assistance information held by the RFID tag in this embodiment is the information held by the transfer source terminal.

### <Sequence of information transfer>

Sequences of information transfer will be described while referring to FIG. 16.

First, from among applications under execution, which are displayed on the screen of the Tablet PC 40 (the applications corresponding to the candidates to be transferred in the invention), an application which the user intends to transfer (Text Editor is illustrated in FIG. 16) is tapped by the electronic pen 30 ((1)).

When the application is tapped, in the Tablet PC 40, a RFID tag writer 44 writes an application name, a file name, a file path, and an IP address of a wireless LAN interface into the electronic pen 30 (a storage unit 33 of a RFID tag 31) which tapped the application a little while ago ((2)).

Next, in the PDA 50, a display screen of a display unit 51 is tapped by the same electronic pen 30 as the one which tapped the application a little while ago ((4)).

When the display screen is tapped, in the PDA 50, the RFID tag reader 54 reads stored information from the RFID tag ((5)).

When these pieces of information (the transfer assistance information) are read, in the PDA 50, a communication unit 57 thereof acquires a file from the Tablet PC 40 via the wireless LAN by use of the IP address, the file name, and the file path, which were read a little while ago ((6)). Upon receiving the file, in the PDA 50, an application activation unit 55 thereof executes the Text Editor, and provides an environment equivalent to that of the Tablet PC 40.

Thus, it becomes possible to transfer the Text Editor environment on which the work has been performed in the transfer source terminal (the Tablet PC is illustrated in FIG. 16) 40 to the transfer destination terminal (the PDA is illustrated in FIG. 16) 50 by use of the transfer assistance apparatus (the electronic pen is illustrated in FIG. 16) 30.

Note that sequences between the functional blocks of the terminals in this embodiment are a combination of those of the second embodiment and the third embodiment, and accordingly, description thereof will be omitted.

The invention can be implemented in other various modes without departing from the spirit or main features thereof. Therefore, the embodiments are mere illustrations in every aspect, and the invention should not be interpreted definitely.

According to the invention, it is possible to perform the information transfer between the terminals without being limited to the capacity of the memory included in a transfer assistance apparatus (also referred to as a relay apparatus. such as the electronic pen when the information transfer is performed between the terminals by use of the transfer assistance apparatus, and further to provide a technology in which the transfer assistance apparatus such as the electronic pen does not require the power source for driving the devices thereof.

Moreover, according to the invention, in the information transfer between the adjacent terminals, the transfer assistance apparatus (for example, the input apparatus. such as the electronic pen is "physically" moved between the terminals, and the information is transferred therebetween.

Therefore, the intuitive information transfer method is realized.

Moreover, the RFID tag is used for the transfer assistance apparatus (for example, the input apparatus., and thus the memory chip, the CPU and the power source become unnecessary.

Accordingly, an advantage is brought in terms of cost.

Furthermore, the invention adopts the mode which passes the transfer assistance information through the transfer assistance apparatus (for example, the RFID tag., and performs the actual information transfer on the network.

Accordingly, as compared with the conventional technology, there are no limitations on the amount of data to be transferred.

## Claims

1. An inter-terminal information transfer system which is provided with a transfer assistance apparatus and terminals, comprising:
a storage unit that stores transfer assistance information; and
an antenna unit that transmits the information in the storage unit by use of a received radio wave, wherein:
each of the terminals includes a reader unit that reads the transfer assistance information from the storage unit included in the transfer assistance apparatus via the antenna unit thereof, and a communication unit that performs network communication;
the reader unit reads the transfer assistance information from the storage unit included in the transfer assistance apparatus via the antenna unit thereof; and
the communication unit performs information transfer with another terminal based on the read transfer assistance information.

2. The inter-terminal information transfer system according to Claim 1, wherein:
the transfer assistance information is an identifier of a transfer destination terminal; and
when arbitrary information to be transferred among information held by a transfer source terminal is indicated through a display screen included in the transfer source terminal, the transfer source terminal transfers the indicated arbitrary information to the transfer destination terminal indicated by the transfer assistance information read from the storage unit included in the transfer assistance apparatus.

3. The .inter-terminal information transfer system according to Claim 1, wherein:
the transfer assistance information is a pointer to the information held by the transfer source terminal;
each of the terminals further includes a writer unit that writes the information to the storage unit included in the transfer assistance apparatus via the antenna unit thereof;
when arbitrary information to be transferred among information held by the transfer source terminal is indicated through a display screen included in the transfer source terminal, the transfer source terminal writes the pointer to the indicated information into the storage unit by the writer unit; and
further, when a display screen included in the transfer destination terminal is indicated, the transfer destination terminal reads the transfer assistance information from the storage unit, and acquires the information from the transfer source terminal by use of the pointer indicated by the transfer assistance information.

4. The inter-terminal information transfer system according to Claim 1, wherein the information to be transferred between the terminals is at least one of a file and a folder that are held by the transfer source terminal.

5. The inter-terminal information transfer system according to Claim 1, wherein:
the information to be transferred between the terminals is application information on an application being executed by the transfer source terminal; and
the transfer destination terminal provides an environment of the same application as that being executed by the transfer source terminal upon receiving the application information taken.

6. The inter-terminal information transfer system according to Claim 1, wherein the transfer assistance apparatus is an input apparatus of the terminal.

7. The inter-terminal information transfer system according to Claim 1, wherein the input apparatus assistance apparatus is an electronic pen of the terminal.

8. The inter-terminal information transfer system according to Claim 1, wherein the storage unit that stores the transfer assistance information and the antenna unit that transmits the information of the storage unit by use of the received radio is composed of a non-contact IC chip.

9. A system for performing information transfer between terminals, comprising:
a transfer source terminal; and
a transfer assistance apparatus that includes a storage unit storing transfer destination specifying information for specifying a transfer destination, wherein the transfer source terminal includes:
a display displaying candidates to be transferred;
an inputting unit allowing a user to select one to be transferred among the candidates to be transferred, which are displayed on the display;
a reading unit reading the transfer destination specifying information from the storage unit included in the transfer assistance apparatus; and
a unit transmitting, to the transfer destination specified by the transfer destination specifying information, the selected candidate to be transferred.

10. A system for performing information transfer between terminals, comprising:
a transfer source terminal;
a transfer destination terminal; and
a transfer assistance apparatus that includes a storage unit, wherein:
the transfer source terminal includes:
a display displaying candidates to be transferred;
an inputting unit allowing a user to select one to be transferred among the candidates to be transferred, which are displayed on the display; and
a writing unit writing information for accessing the selected candidate to be transferred into the storage unit included in the transfer assistance apparatus; and
the transfer destination terminal includes:
a display displaying candidates for a storage destination;
an inputting unit allowing a user to select one to be set as the storage destination among the candidates for the storage destination, which are displayed on the display;
a reading unit reading, from the storage unit included in the transfer assistance apparatus, the information for accessing the selected candidate to be transferred; and
an unit acquiring the selected candidate to be transferred from the transfer source terminal based on the information for accessing the selected candidate to be transferred, and storing the selected candidate to be transferred in the selected storage destination.

11. A method of performing information transfer in a system including a transfer source terminal, a transfer destination terminal, and a transfer assistance apparatus terminal that includes a storage unit storing transfer destination specifying information for specifying a transfer destination, the method comprising the steps of:
by the transfer source terminal, displaying candidates to be transferred on a display thereof;
by the transfer source terminal, allowing a user to select one to be transferred among the displayed candidates to be transferred;
by the transfer source terminal, reading the transfer destination specifying information from the storage unit included in the transfer assistance apparatus; and
by the transfer source terminal, transmitting, to the transfer destination specified by the transfer destination specifying information, the selected candidate to be transferred.

12. A method of performing information transfer in a system including a transfer source terminal, a transfer destination terminal, and a transfer assistance apparatus terminal that includes a storage unit, the method comprising the steps of:
by the transfer source terminal, displaying candidates to be transferred on a display thereof;
by the transfer source terminal, allowing a user to select one to be transferred among the candidates to be transferred, which are displayed on the display;
by the transfer source terminal, writing information for accessing the selected candidate to be transferred into the storage unit included in the transfer assistance apparatus;
by the transfer destination terminal, displaying candidates for a storage destination on a display thereof;
by the transfer destination terminal, allowing a user to select one to be set as the storage destination among the candidates for the storage destination, which are displayed on the display;
by the transfer destination terminal, reading, from the storage unit included in the transfer assistance apparatus, the information for accessing the selected candidates to be transferred; and
by the transfer destination terminal, acquiring the selected candidate to be transferred from the transfer source terminal based on the information for accessing the selected candidate to be transferred, and storing the selected candidate to be transferred in the selected storage destination.

13. A terminal performing information transfer with another terminal, comprising:
a display displaying candidates to be transferred;
an inputting unit allowing a user to select one to be transferred among the candidates to be transferred, which are displayed on the display;
a reading unit reading transfer destination specifying information from a storage unit included in a transfer assistance apparatus; and
an unit transmitting, to a transfer destination specified by the transfer destination specifying information, the selected candidate to be transferred.

14. A terminal performing information transfer with another terminal, comprising:
a display displaying candidates to be transferred;
an inputting unit allowing a user to select one to be transferred among the candidates to be transferred, which are displayed on the display; and
a writing unit writing information for accessing the selected candidate to be transferred into a storage unit included in a transfer assistance apparatus.

15. A terminal performing information transfer with another terminal, comprising:
a display displaying candidates for a storage destination;
an inputting unit allowing a user to select one to be set as the storage destination among the candidates for the storage destination, which are displayed on the display;
a reading unit reading, from a storage unit included in a transfer assistance apparatus, information for accessing a candidate to be transferred; and
an unit for acquiring the candidate to be transferred from the transfer source terminal based on the information for accessing the candidate to be transferred, and storing the candidate to be transferred in the selected storage destination.

16. A program for causing a terminal performing information transfer with another terminal to function as:
an inputting unit allowing a user to select one to be transferred among candidates to be transferred, which are displayed on a display included in the terminal;
a reading unit reading transfer destination specifying information for specifying a transfer destination from a storage unit included in a transfer assistance apparatus; and
an unit transmitting, to the transfer destination specified by the transfer destination specifying information, the selected candidate to be transferred.

17. A program for causing a terminal performing information transfer with another terminal to function as:
an inputting unit allowing a user to select one to be transferred among candidates to be transferred, which are displayed on a display included in the terminal; and
a writing unit writing, into a storage unit included in a transfer assistance apparatus, information for accessing the selected candidate to be transferred.

18. A program for causing a terminal performing information transfer with another terminal to function as:
an inputting unit allowing a user to select one to be set as a storage destination among candidates for the storage destination, which are displayed on a display included in the terminal;
a reading unit reading, from a storage unit included in a transfer assistance apparatus, information for accessing a candidate to be transferred; and
an unit acquiring the candidate to be transferred from a transfer source terminal based on the information for accessing the candidate to be transferred, and storing the candidate to be transferred in the selected storage destination.
